# EUROPÄISCHE PATENTSCHRIFT

(11) **EP 0 576 837 B1**
(45) Veröffentlichungstag und Bekanntmachung des Hinweises auf die Patenterteilung: **13.12.1995**
(21) Anmeldenummer: 93108646.6
(22) Anmeldetag: 28.05.1993
(51) Int. Cl.: B29C 45/12

(54) **Spritzgiessmaschine mit Etagenwerkzeug**
Injection mouding machine with stack mould
Machine à mouler par injection avec moule à étages

(30) Priorität: 17.06.1992 DE 4219924
(43) Veröffentlichungstag der Anmeldung: 05.01.1994
(73) Patentinhaber: Herbst, Richard, D-85386 Eching (DE)
(72) Erfinder: Herbst, Richard, D-85386 Eching (DE)
(74) Vertreter: Witte, Alexander, Dr.-Ing.

(56) Entgegenhaltungen:
- FR-A- 2 294 041
- JP-Y-62 018 418
- PATENT ABSTRACTS OF JAPAN vol. 12, no. 105 (M-681)(2952) 6. April 1988 & JP-A-62 236 717 (UBE IND.LTD.)
- PATENT ABSTRACTS OF JAPAN vol. 11, no. 102 (M-576)(2549) 31. März 1987 & JP-A-61 249 722 (ASAHI CHEM.IND.)
- PATENT ABSTRACTS OF JAPAN vol. 12, no. 98 (M-680)(2945) 31. März 1988 & JP-A-62 233 215 (UBE IND. LTD.)

## Beschreibung

Die Erfindung betrifft eine Spritzgießmaschine mit Etagenwerkzeug, bei dem zwei äußere Werkzeugteile ein Mittelpaket zwischen sich einschließen und das Mittelpaket beidseits mit den Werkzeugteilen Formhohlräume bildet sowie eine Anschlußöffnung und Zuführkanäle zu den Formhohlräumen aufweist, mit einer Antriebs- und Schließeinheit zum Bewirken einer Relativbewegung zwischen den Werkzeugteilen und dem Mittelpaket für ein Öffnen bzw. ein Schließen der Formhohlräume, und mit einem an die Anschlußöffnung anschließbaren Spritzgießaggregat, das während der Relativbewegung zwischen den Werkzeugteilen und dem Mittelpaket an die Anschlußöffnung angeschlossen ist.

Eine Spritzgießmaschine der vorstehend genannten Art ist aus der JP-Y-62-18418 bekannt.

Die bekannte Spritzgießmaschine weist ein Etagenwerkzeug auf, bei dem das Mittelpaket und eines der äußeren Werkzeugteile beweglich, das andere Werkzeugteil hingegen raumfest angeordnet sind. Mittels einer ersten Kolben-Zylinder-Einheit ist das bewegliche Werkzeugteil verfahrbar. Am beweglichen Werkzeugteil ist eine Zahnstange angeordnet, die mit einem Zahnrad kämmt, das am Mittelpaket drehbar gelagert ist. Am raumfesten Werkzeugteil ist ebenfalls eine Zahnstange angeordnet, die auch mit dem am Mittelpaket gelagerten Zähnrad kämmt. Über dieses Getriebe wird erreicht, daß sich beim Verschieben des beweglichen Werkzeugteils das gesamte Etagenwerkzeug gleichmäßig öffnet, weil durch das genannte Getriebe sich das Mittelpaket mit der halben Geschwindigkeit, verglichen mit dem beweglichen Werkzeugteil, bewegt.

Bei der bekannten Spritzgießmaschine ist das Spritzgießaggregat neben dem raumfesten Werkzeugteil und zwar auf der dem Mittelpaket gegenüberliegenden Seite angeordnet. Das Spritzgießaggregat befindet sich auf einem Wagen und ist somit in der selben Richtung wie das bewegliche Werkzeugteil und das Mittelpaket verschiebbar. An dem Wagen ist eine zweite Kolben-Zylinder-Einheit angeordnet. Deren Zylinder ist fest mit dem Wagen des Spritzgießaggregats verbunden, während die Kolbenstange starr mit dem raumfesten Werkzeugteil verbunden ist. Ein die Kolbenstange tragender Kolben ist doppelwirkend ausgebildet, wobei die Wirkflächen auf beiden Seiten des Kolbens unterschiedlich groß gewählt sind. Auf diese Weise ist das Spritzgießaggregat relativ zum raumfesten Werkzeugteil verfahrbar.

Das Spritzgießaggregat ist über einen langgestreckten Injektionszylinder, der sich durch eine Durchlaßöffnung des raumfesten Werkzeugteils hindurch erstreckt, mit dem Mittelpaket verbunden, in dem ein Mundstück des Injektionszylinders gegen eine Anschlußöffnung des Mittelpaketes gedrückt wird. Der Anpreßdruck des Mundstücks kann dabei mittels der zweiten Kolben-Zylinder-Einheit vorgegeben werden.

Wenn nun das Etagenwerkzeug durch Betätigen der ersten Kolben-Zylinder-Einheit geöffnet wird, so kann man durch geeignete Ansteuerung der zweiten Kolben-Zylinder-Einheit erreichen, daß das Spritzgießaggregat dem ebenfalls bewegten Mittelpaket folgt und das Mundstück des Injektionszylinders in Anlage an der Anschlußöffnung des Mittelpaketes verbleibt.

Auf diese Weise bildet das Spritzgießaggregat mit dem Mittelpaket eine Einheit, die auch bei der Öffnungs- und Schließbewegung des Etagenwerkzeugs nicht getrennt wird. Die erforderlichen Reaktionskräfte zwischen dem Mittelpaket und dem Spritzgießaggregat werden dabei einerseits vom Mittelpaket über das Zahnrad, die Zahnstange, das bewegliche Werkzeugteil und die erste Kolben-Zylinder-Einheit in das Fundament und andererseits über das Spritzgießaggregat, dessen Wagen, Zylinder, Kolben, Kolbenstange und das raumfeste Werkzeugteil, ebenfalls in das Fundament geleitet.

Bei der bekannten Spritzgießmaschine ist von Nachteil, daß die erheblichen Anpreßkräfte, die zwischen dem Mundstück des Spritzgießaggregates und dem Mittelpaket wirken müssen, über diesen sehr komplizierten Weg jeweils im Fundament der Spritzgießmaschine abgestützt werden müssen. Ferner hat die bekannte Spritzgießmaschine den Nachteil, daß das Spritzgießaggregat wegen dieser Kinematik, d.h. der Abstützung über die zweite Kolben-Zylinder-Einheit am raumfesten Werkzeugteil, ständig durch Betätigen der zweiten Kolben-Zylinder-Einheit dem Mittelpaket nachgefahren werden muß. Es ist daher stets erforderlich, den Druck in der zweiten Kolben-Zylinder-Einheit entsprechend nachzustellen, und zwar bei jedem Öffnungs- und Schließvorgang des Etagenwerkzeugs. Dies erfordert eine relativ komplizierte Steuerung und ist Anlaß für Störungen infolge von Leckagen der ständig arbeitenden zweiten Kolben-Zylinder-Einheit.

Der Erfindung liegt demgegenüber die Aufgabe zugrunde, eine Spritzgießmaschine der eingangs genannten Art dahingehend weiterzubilden, daß das Spritzgießaggregat bei sehr viel einfacherem Aufbau der Spritzgießmaschine, bei günstigerem Reaktionskräfteverlauf und schließlich ohne Betätigung von Kolben-Zylinder-Einheiten stets in Anlage an dem Mittelpaket verbleiben kann.

Diese Aufgabe wird erfindungsgemäß dadurch gelöst, daß das Spritzgießaggregat mit dem Mittelpaket unmittelbar verbunden ist.

Die der Erfindung zugrundeliegende Aufgabe wird auf diese Weise vollkommen gelöst. Durch die unmittelbare mechanische Verbindung von Spritzgießaggregat und Mittelpaket wird nämlich erreicht, daß während des Betriebes der Spritzgießmaschine, d.h. beim periodischen Öffnen und Schließen des Etagenwerkzeuges keinerlei Betätigungsvorrichtungen, die zwischen Mittelpaket und Spritzgießaggregat angeordnet wären, betätigt werden müssen. Vielmehr ist es ausreichend, das Spritzgießaggregat ein einziges Mal beim Einrichten der Spritzgießmaschine mit dem Mittelpaket zu verbinden und dann in Eingriff mit diesem während der gesamten Betriebszeit der Spritzgießmaschine zu belassen, bis ein neues Werkzeug eingesetzt wird oder nach Herstellung einer großen Serie von Kunststoffteilen die üblichen Wartungsarbeiten erforderlich sind.

Bei einer bevorzugten Ausgestaltung der Erfindung ist das Spritzgießaggregat mit dem Mittelpaket über Zugstangen verbunden.

Diese Maßnahme hat den Vorteil, daß die starre mechanische Verbindung zwischen Spritzgießaggregat und Mittelpaket in einfacher Weise hergestellt werden kann, indem die beiden Elemente mit den genannten Zugstangen verbunden und dann durch Anspannen der Zugstangen der erforderliche Anpreßdruck hergestellt wird.

Bei einer Weiterbildung dieser Variante sind die Zugstangen als Kolbenstangen von Stellzylindern ausgebildet.

Diese Maßnahme hat den Vorteil, daß eine Fernsteuerung und damit Automatisierung bei der Verbindung von Mittelpaket und Spritzgießaggregat möglich ist.

Bei einer anderen Variante sind die Zugstangen hingegen als Schrauben ausgebildet.

Diese Maßnahme hat den Vorteil, daß ein wesentlich weniger aufwendiges und einfaches Verbindungsmittel (Schrauben) verwendet wird, wodurch sich insbesondere auch Kosteneinsparungen ergeben. Da die Verbindung zwischen Mittelpaket und Spritzgießaggregat nur beim Werkzeugwechsel oder bei allfälligen Wartungsarbeiten aufgetrennt werden muß, d.h. in relativ großen Zeitabständen, ist es für die Funktion der Spritzgießmaschine völlig ausreichend, das Mittelpaket und das Spritzgießaggregat über Schrauben zu verbinden.

Bei bevorzugten Ausgestaltungen der erfindungsgemäßen Spritzgießmaschine kann entweder eines der Werkzeugteile raumfest angeordnet sein, wie eingangs im Hinblick auf den gattungsbildenden Stand der Technik erläutert, es ist jedoch in kinematischer Umkehr auch möglich, das Mittelpaket raumfest anzuordnen und beide Werkzeugteile gegenüber diesem beweglich auszuführen.

Bei einem weiteren Ausführungsbeispiel der erfindungsgemäßen Maschine ist am Mittelpaket ein Schnorchel angeordnet, der sich bei geschlossenem Etagenwerkzeug durch eine Durchtrittsöffnung des Werkzeugteils erstreckt und an seinem Ende eine Anschlußöffnung für einen Auslaß eines Injektionszylinders des Spritzgießaggregates aufweist.

Entsprechend ist, ebenfalls in kinematischer Umkehr, erfindungsgemäß möglich, am Auslaßende eines Injektionszylinders des Spritzgießaggregates einen Schnorchel vorzusehen, der sich bei geschlossenem Etagenwerkzeug durch eine Durchtrittsöffnung eines Werkzeugteils erstreckt und an seinem Ende eine mit einer Anschlußöffnung des Mittelpakets kuppelbare Auslaßöffnung aufweist.

Ausführungsformen der Erfindung werden anhand der Zeichnungen näher erläutert. Es zeigt:
- Fig. 1: einen schematischen Schnitt durch eine Spritzgießmaschine gemäß einer ersten Ausführungsform der Erfindung;
- Fig. 2: ein Detail einer gegenüber dem Ausführungsbeispiel gemäß Fig. 1 abgeänderten Ausführungsform;
- Fig. 3: in gleicher Darstellung wie Fig. 1 eine Spritzgießmaschine gemäß einer zweiten Ausführungsform der Erfindung; und
- Fig. 4: ein Detail einer bei der Vorrichtung nach Fig. 1 anwendbaren Ausführungsvariante.

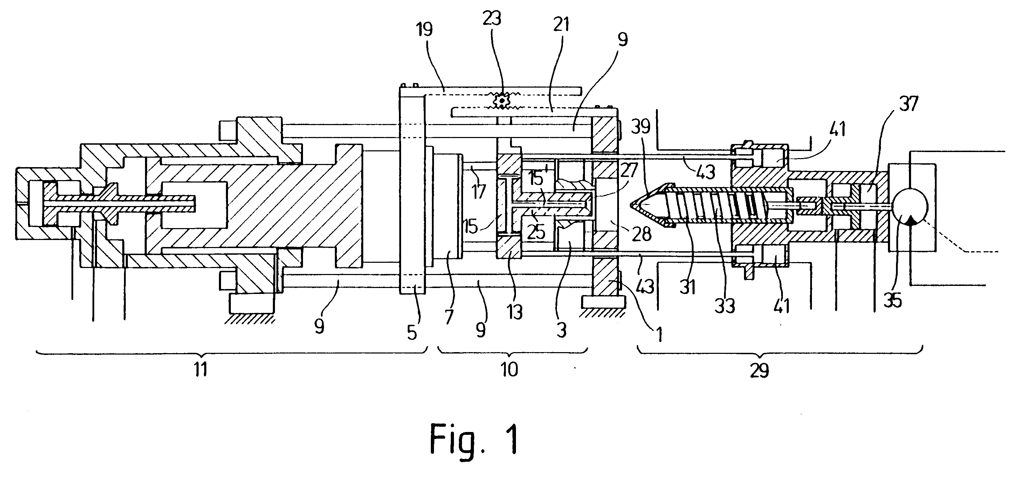

Die in Fig. 1 schematisch dargestellte Spritzgießmaschine hat ein Etagenwerkzeug 10 mit einer feststehenden Werkzeugaufspannplatte 1, die ein Spritzgießwerkzeugteil 3 trägt, und mit einer beweglichen Werkzeugaufspannplatte 5, die ein bewegliches Spritzgießwerkzeugteil 7 trägt. Die bewegliche Werkzeugaufspannplatte 5 ist mittels Führungen 9 relativ zur feststehenden Aufspannplatte 1 beweglich geführt und kann durch eine Antriebs- und Schließeinheit 11 zur Öffnungs- und Schließbewegung angetrieben und mit dem erforderlichen Schließdruck beaufschlagt werden.

Zwischen den Werkzeugteilen 3 und 7 weist das Etagenwerkzeug 10 ein Mittelwerkzeug oder sogenanntes Mittelpaket 13 auf. Die Werkzeugteile 3 und 7 und das Mittelpaket 13 tragen einander zugewendete und zur Bildung von Formhohlräumen zusammenwirkende Formkonturen (nicht dargestellt). Im Mittelpaket 13 sind Zuführkanäle 15 zum Zuführen und Verteilen des geschmolzenen Kunststoffmaterials in die von den Werkzeugteilen 3, 7 und dem Mittelpaket 13 gebildeten Formhohlräume ausgebildet.

Das Mittelpaket 13 ist an Führungen 17 relativ zu den Werkzeugteilen 3, 7 verschiebbar und mit der beweglichen Werkzeugaufspannplatte 5 in an sich bekannter Weise durch eine Antriebsübertragung mit 2:1 Untersetzung gekoppelt, so daß es bei der Öffnungs- und Schließbewegung der beweglichen Werkzeugaufspannplatte 5 entsprechende Bewegungen mit halber Geschwindigkeit und über die halbe Öffnungswegstrecke durchführt. Als Beispiel für eine solche Antriebsübertragung sind in der Zeichnung zwei sich parallel zueinander erstreckende, mit der feststehenden bzw. der beweglichen Werkzeugaufspannplatte 1, 5 verbundene Zahnstangen 19, 21 dargestellt, mit denen ein an dem Mittelpaket 13 gelagertes Zahnrad 23 kämmt. Die Antriebsübertragung mit 2:1 Untersetzung kann aber auch in anderer Weise, z.B. durch Schneckengetriebe oder Kettentransmissionen realisiert werden, wie dem Fachmann bekannt.

Das Mittelpaket 13 weist auf seiner der feststehenden Werkzeugaufspannplatte 1 zugewandten Seite einen vorspringenden rohrförmigen Anschlußstutzen auf, der üblicherweise als Schnorchel 25 bezeichnet wird und einen zentralen Zuführkanal 15' enthält, der zu einer Anschlußöffnung 27 am Ende des Schnorchels 25 führt. Die Werkzeugaufspannplatte 1 und das von ihr getragene Werkzeugteil 3 weisen jeweils eine Mittelöffnung 28 auf, in die der Schnorchel 25 hineinragen kann, unter Umständen auch soweit, daß bei geschlossenem Etagenwerkzeug 10 die Anschlußöffnung 27 über die Rückseite der feststehenden Werkzeugaufspannplatte 1 vorsteht.

Auf der in Fig. 1 rechten Seite von der Werkzeugaufspannplatte 1 ist ein Spritzgießaggregat 29 angeordnet, welches in bekannter Weise einen Injektionszylinder 31 und eine darin drehbare und axial verschiebbare Schnecke 33 aufweist. Ein hydraulischer oder elektrischer Drehantrieb 35 bewirkt die Drehung der Schnecke 33, um das Kunststoffmaterial zu plastifizieren und homogenisieren, während ein Hydraulikzylinder 37 für das axiale Verschieben der Schnecke 33 für den Spritzgießvorgang vorgesehen ist. Am Auslaßende des Injektionszylinders 31 ist ein konisches Mundstück 39 mit Düse vorgesehen, welches passend zu der Form der Anschlußöffnung 27 des Schnorchels 25 ausgebildet ist.

Durch hydraulische Stellzylinder 41 kann das gesamte Spritzgießaggregat 29 axial verschoben werden, um das Mundstück 39 des Injektionszylinders 31 gegen die Anschlußöffnung 27 des Schnorchels 25 anzupressen, so daß eine nach außen abgedichtete Ankopplung des Injektionszylinders 31 an den zentralen Zuführkanal 15' des Mittelpaketes 13 hergestellt wird. Kolbenstangen 43 der hydraulischen Stellzylinder 41 sind durch Öffnungen in der feststehenden Werkzeugaufspannplatte 1 hindurchgeführt und am Mittelpaket 13 verankert.

Anstelle der hydraulischen Stellzylinder 41 kann die Verbindung von Mittelpaket und Spritzgießaggregat auch über Schrauben vorgenommen werden, die ebenso als Zugstangen wirken wie die Kolbenstangen 43 der Stellzylinder 41.

Wenn durch Druckmittelbeaufschlagung in den in Fig. 1 linken Kammern der Stellzylinder 41 der Injektionszylinder 31 gegen den Schnorchel 25 des Mittelpaketes 13 angepreßt ist, bilden das Mittelpaket 13 und das gesamte Spritzgießaggregat 29 eine starr gekoppelte Einheit, so daß das Spritzgießaggregat 29 die Öffnungs- und Schließbewegung des Mittelpaketes 13 mitmacht. Durch diese Anhängung des Spritzgießaggregates 29 an das Mittelpaket 13 wird erreicht, daß die Ankopplung des Mundstücks 39 an die Anschlußöffnung 27 während des ganzen Spritzprozesses, also über viele Spritzzyklen einschließlich der Formschließ- und Formöffnungsbewegungen unverändert aufrecht erhalten wird.

Die Anpreßkraft der Stellzylinder 41 wirkt über die Kolbenstangen 43 direkt zwischen Spritzgießaggregat 29 und Mittelpaket 13 und führt daher nicht zu einer ungleichen Verteilung der Schließkräfte zwischen den beiden äußeren Werkzeugteilen 1, 3 bzw. 5, 7 und dem Mittelpaket 13.

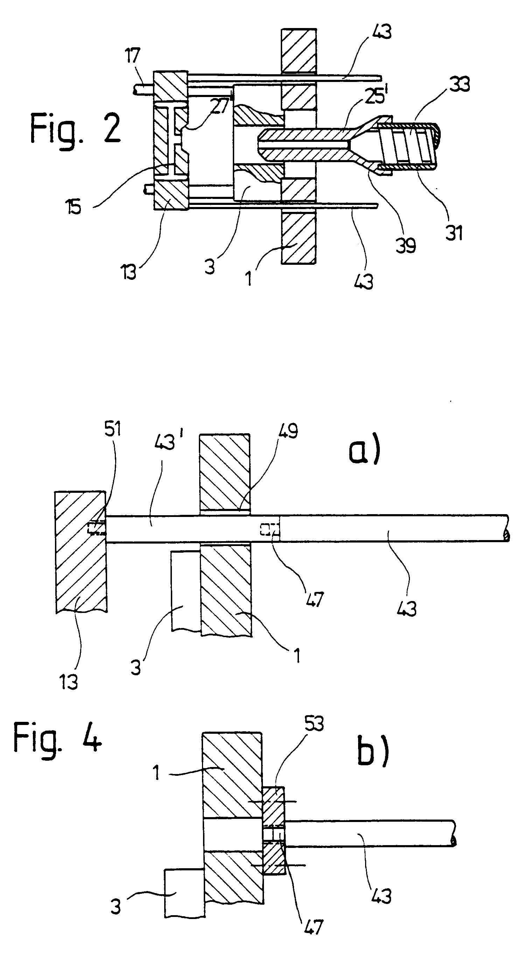

In Fig. 2 ist das Detail einer abgeänderten Ausführungsform dargestellt. Bei dieser Ausführungsform ist der die Mittelöffnung 28 der festen Aufspannplatte 1 und des Werkzeugteils 3 durchdringende Anschlußstutzen oder Schnorchel 25' nicht dem Mittelpaket 13, sondern dem Injektionszylinder 31 zugeordnet und beispielsweise als Verlängerung des Mundstücks 39 ausgebildet. Am Mittelpaket 13 befindet sich dann kein Schnorchel, sondern lediglich eine entsprechend geformte Anschlußöffnung 27', mit der das vordere Ende des Schnorchels 25' durch Anpressen gekoppelt werden kann.

Damit wird die Länge des Zuführkanals 15 im Mittelpaket 13 wesentlich verkürzt, und deshalb ist die Menge des bei einem Farbwechsel oder Materialwechsel in den Zuführkanälen 15 des Mittelpaketes 13 verbleibenden Materials wesentlich geringer, wodurch sich die Reinigung der Zuführkanäle 15 im Mittelpaket 13 vereinfacht. Die in der Mittelbohrung des Schnorchels 25 verbleibende Materialmenge kann, nachdem der Injektionszylinder 31 vom Mittelpaket 13 entkoppelt wurde, einfach ins Freie abgespritzt werden. Der Materialverlust wird dadurch reduziert und die Gefahr, daß bei Farb- oder Materialwechsel Materialrückstände den neuen Spritzgießprozess beeinträchtigen, wird wesentlich verringert.

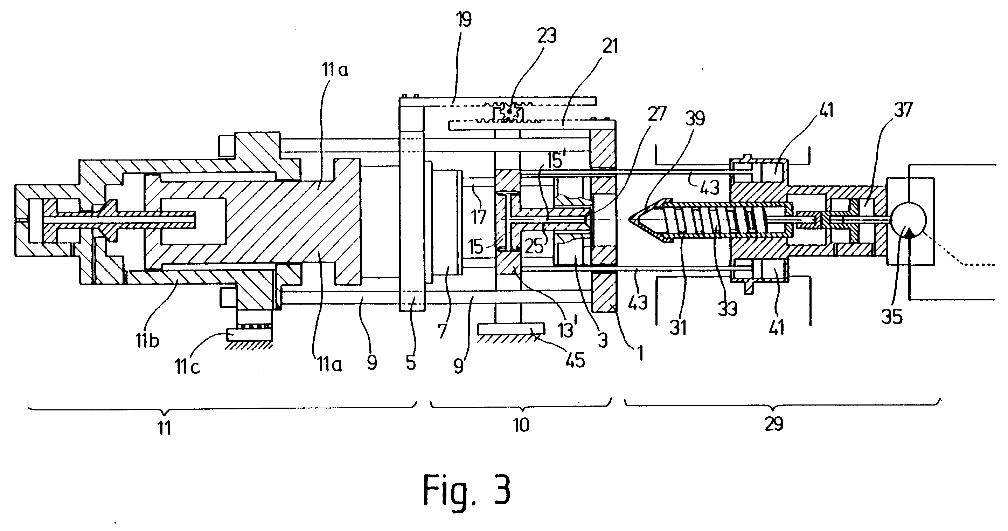

Die in Fig. 3 dargestellte Ausführungsform der Spritzgießmaschine unterscheidet sich von der Ausführungsform nach Fig. 1 dadurch, daß das hier mit 13' bezeichnete Mittelpaket nicht beweglich, sondern ortsfest angeordnet ist, was in Fig. 3 durch eine Basis 45 nur schematisch angedeutet sein soll. Dagegen sind die beiden beiderseits des Mittelpaketes 13' angeordneten Werkzeugaufspannplatten 1 und 5 mit den daran befestigten Werkzeugteilen 3 und 7 beweglich angeordnet und durch die Zahnstangen 19, 21, die mit dem am Mittelpaket 13' gelagerten Zahnrad 23 kämmen, zu gegenläufigen Bewegungen zwangsgekoppelt.

Wenn ein Kolben 11a der Antriebs- und Schließeinheit 11 auf die Werkzeugaufspannplatte 5 eine in Fig. 3 nach rechts gerichtete Kraft ausübt, um das Werkzeugteil 7 gegen das Mittelpaket 13' anzudrücken, dann wird eine gleich große, in Fig. 3 nach links gerichtete Kraft auf die Werkzeugaufspannplatte 1 mit dem Werkzeugteil 3 ausgeübt. Die Bewegungen der Werkzeugaufspannplatten 1, 5 werden über das Zahnstangengetriebe 19, 21, 23 zu exakt gegenläufigen Bewegungen relativ zu dem ortsfesten Mittelpaket 13' synchronisiert. Selbstverständlich sind auch andere Antriebsmechanismen denkbar, um die Werkzeugaufspannplatten 1, 5 zu gegensinnigen Öffnungs- und Schließbewegungen relativ zu dem feststehenden Mittelpaket 13' anzutreiben.

Bei der Ausführungsform nach Fig. 1 ist das Spritzgießaggregat 29 verschiebbar angeordnet und kann z.B. durch die Stellzylinder 41 verschoben werden, um das Mundstück 39 des Injektionszylinders 31 an die Anschlußöffnung 27 des Schnorchels 25 des Mittelpaketes 13' anzupressen und abdichtend anzukoppeln. Auch diese Ausführungsform kann entsprechend Fig. 2 so abgeändert werden, daß der Schnorchel 25 nicht am Mittelpaket 13', sondern am Mundstück 39 des Injektionszylinders 31 angeordnet ist.

Auch bei der Ausführungsform nach Fig. 3 sind die Kolbenstangen 43 der Stellzylinder 41 am Mittelpaket 13' verankert. Wenn die stangenseitigen Arbeitsräume der Stellzylinder 41 mit Druckmittel beaufschlagt sind, ist das gesamte Spritzaggregat 29 gegen den Schnorchel 25 des Mittelpaketes 13' angedrückt, so daß das Spritzgießaggregat 29 und das Mittelpaket 13' eine in sich starre und ortsfeste Einheit bilden. Der Schnorchel 25 ist so lang bemessen, daß bei angekoppeltem Injektionszylinder 31 genügend Spielraum für die Öffnungs- und Schließbewegungen der Werkzeugaufspannplatte 1 mit dem Werkzeugteil 3 zur Verfügung steht.

Deshalb kann auch bei dieser Ausführungsform der Injektonszylinder 31 während aufeinanderfolgender Spritzzyklen ständig an das Mittelpaket 13' angekoppelt bleiben und braucht nicht bei jedem Spritzzyklus an- und abgekoppelt zu werden. Anstatt mit dem ortsfesten Mittelpaket 13' können die Kolbenstangen 43 der Stellzylinder 41 auch an einem sonstigen ortsfesten Widerlager verankert sein und brauchen sich in diesem Fall nicht durch die Werkzeugaufspannplatte 1 zu erstrecken.

In Fig. 4 (a) und (b) sind Konstruktionsvarianten für die Ausführungsform nach Fig. 1 dargestellt, die es ermöglichen, die in Fig. 1 dargestellte Spritzgießmaschine wahlweise auch in konventioneller Weise, d.h. mit An- und Abkoppeln des Injektionszylinders 31 bei jedem Spritzzyklus zu betreiben.

Zu diesem Zweck ist in Fig. 4 (a) jede der als Zugstangen wirkenden Kolbenstangen 43, die in Fig. 1 das Mittelpaket 13 mit den Stellzylindern 41 des Einspritzaggregats 29 verbinden, unterteilt, d.h. sie weist ein Verlängerungsstück 43' auf, das mit der Kolbenstange 43 z.B. durch einen Gewindezapfen 47 lösbar verbunden ist. Das Verlängerungsstück 43' erstreckt sich durch eine Durchtrittsöffnung 49 der feststehenden Werkzeugaufspannplatte 1 hindurch bis zum Mittelpaket 13 und ist an diesem, zum Beispiel ebenfalls durch einen Gewindezapfen 51, lösbar verankert. Mit dieser in Fig. 4 (a) dargestellten Anordnung kann die Spritzgießmaschine nach Fig. 4 so betrieben werden, wie oben anhand von Fig. 1 beschrieben wurde.

Wie in Fig. 4 (b) dargestellt, kann das Verlängerungsstück 43' weggelassen werden und stattdessen ein Flansch 53 vorgesehen werden, der eine Innengewindebohrung aufweist, in die der Gewindezapfen 47 der Kolbenstange 43 eingeschraubt werden kann. Dieser Flansch 53 kann mittels Schrauben an der feststehenden Werkzeugaufspannplatte 1 befestigt werden, so daß die Stellzylinder 41 der Spritzgießmaschine nach Fig. 1 mit der feststehenden Werkzeugaufspannplatte 1 als ortsfestem Widerlager verbunden sind.

In Abänderung von Fig. 4 kann die Anordnung auch so getroffen werden, daß die Verlängerungsstücke 43' nicht in Flucht zu den Kolbenstangen 43, sondern versetzt zu diesen angeordnet sind. Zu diesem Zweck wird anstelle des Flansches 53 (Fig. 4 (b)) eine Traverse verwendet, die mit beiden Kolbenstangen 43 (Fig. 1) verbunden wird, z.B. durch die in Fig. 4 dargestellten Gewindezapfen 47. An dieser Traverse können dann, versetzt zu den Kolbenstangen 43 und auf der von diesen abgewendeten Seite, Verlängerungsstücke 43' befestigt werden, die die Verbindung zu dem Mittelpaket 13 herstellen.

In einer weiteren, nicht dargestellten Variante kann die Anordnung so getroffen werden, daß beide Werkzeugaufspannplatten 1, 5 und das Mittelpaket 13 der Maschine verschiebbar gelagert sind und wahlweise entweder das Mittelpaket 13 oder die düsenseitige Werkzeugaufspannplatte 1 durch geeignete Fixiermittel ortsfest festgelegt werden kann. Die Stellzylinder 41 des Spritzgießaggregates 29 sind ebenfalls wahlweise mit der düsenseitigen Werkzeugaufspannplatte 1 oder dem Mittelpaket 13 koppelbar, z . B. wie anhand von Fig. 4 beschrieben. Mit einer solchen Anordnung kann eine konventionelle Spritzgießmaschine, deren Injektionszylinder mittels der an der ortsfesten Werkzeugaufspannplatte angreifenden Stellorgane bei jedem Spritzzyklus an das bewegbare Mittelpaket angekoppelt bzw. von ihm abgekoppelt wird, wahlweise in eine Maschine gemäß Fig. 1 oder in eine Maschine gemäß Fig. 2, bei der also das Mittelpaket mit dem permanent angekoppelten Einspritzaggregat eine entweder gemeinsam bewegliche oder eine ortsfeste Einheit bilden, ausgerüstet werden.

## Patentansprüche

1. Spritzgießmaschine mit Etagenwerkzeug (10), bei dem zwei äußere Werkzeugteile (3, 7) ein Mittelpaket (13, 13') zwischen sich einschließen und das Mittelpaket (13) beidseits mit den Werkzeugteilen (3, 7) Formhohlräume bildet sowie eine Anschlußöffnung (27) und Zuführkanäle (15) zu den Formhohlräumen aufweist, mit einer Antriebs- und Schließeinheit (11) zum Bewirken einer Relativbewegung zwischen den Werkzeugteilen (3, 7) und dem Mittelpaket (13, 13') für ein Öffnen bzw. ein Schließen der Formhohlräume, und mit einem an die Anschlußöffnung (27) anschließbaren Spritzgießaggregat (29), das während der Relativbewegung zwischen den Werkzeugteilen (3, 7) und dem Mittelpaket (13) an die Anschlußöffnung (27) angeschlossen ist, dadurch gekennzeichnet, daß das Spritzgießaggregat (29) mit dem Mittelpaket (13, 13') unmittelbar verbunden ist.

2. Spritzgießmaschine nach Anspruch 1, dadurch gekennzeichnet, daß das Spritzgießaggregat (29) mit dem Mittelpaket (13, 13') über Zugstangen verbunden ist.

3. Spritzgießmaschine nach Anspruch 2, dadurch gekennzeichnet, daß die Zugstangen als Kolbenstangen (43) von Stellzylindern (41) ausgebildet sind.

4. Spritzgießmaschine nach Anspruch 2, dadurch gekennzeichnet, daß die Zugstangen als Schrauben ausgebildet sind.

5. Spritzgießmaschine nach einem oder mehreren der Ansprüche 1 bis 4, dadurch gekennzeichnet, daß eines der Werkzeugteile (3) raumfest angeordnet ist.

6. Spritzgießmaschine nach einem oder mehreren der Ansprüche 1 bis 4, dadurch gekennzeichnet, daß das Mittelpaket (13') raumfest angeordnet ist.

7. Spritzgießmaschine nach einem oder mehreren der Ansprüche 1 bis 6, dadurch gekennzeichnet daß am Mittelpaket (13, 13') ein Schnorchel (25) angeordnet ist, der sich bei geschlossenem Etagenwerkzeug (10) durch eine Durchtrittsöffnung (49) eines Werkzeugteils (3) erstreckt und an seinem Ende eine Anschlußöffnung (27) für einen Auslaß eines Injektionszylinders (31) des Spritzgießaggregates (29) aufweist.

8. Spritzgießmaschine nach einem oder mehreren der Ansprüche 1 bis 6, dadurch gekennzeichnet, daß am Auslaßende eines Injektionszylinders (31) des Spritzgießaggregates (29) ein Schnorchel (25') vorgesehen ist, der sich bei geschlossenem Etagenwerkzeug (10) durch eine Durchtritts-Öffnung (49) eines Werkzeugteils (3) erstreckt und an seinem Ende eine mit einer Anschlußöffnung (27') des Mittelpakets (13, 13') kuppelbare Auslaßöffnung aufweist.

## Claims

1. An injection moulding machine with a stack mould (10) having two outer die mould portions (3, 7) enclosing between them a center platen (13, 13'), the center platen (13, 13') defining form hollow cavities on both sides thereof together with the mould portions (3, 7) and being provided with a connector opening (27) as well as with feed ducts (15) for the form hollow cavities, the machine further comprising a drive-and-close unit (11) for effecting a relative displacement between the die mould portions (3, 7) and the center platen (13, 13') for opening and closing the form hollow cavities, respectively, and an injection moulding apparatus (29) adapted to be connected to the connector opening (27) and being connected to the connector opening (27) during the relative displacement between the die mould portions (3, 7) and the center platen (13), characterized in that the injection moulding apparatus (29) is directly connected to the center platen (13, 13').

2. The injection moulding machine of claim 1, characterized in that the injection moulding apparatus (29) is connected to the center platen (13, 13') via rods.

3. The injection moulding machine of claim 2, characterized in that the rods are configured as piston rods (43) of positioning cylinders (41).

4. The injection moulding machine of claim 2, characterized in that the rods are configured as bolts.

5. The injection moulding machine of any of claims 1 - 4, characterized in that one of the die mould portions (3) is arranged stationarily.

6. The injection moulding machine of any of claims 1 - 4, characterized in that the center platen (13') is arranged stationarily.

7. The injection moulding machine of any of claims 1 - 6, characterized in that a snorkel (25) is provided on the center platen (13, 13'), the snorkel (25) extending through a through opening of one of the die mould portions (3) when the stack mould (10) is closed, the snorkel (25) having a terminal end with a connector opening (27) for connection to a discharge means of an injection cylinder (31) of an injection moulding apparatus (29).

8. The apparatus of any of claims 1 - 6, characterized in that a snorkel (25') is provided at a discharge terminal of an injection cylinder (31) of an injection moulding apparatus (29), the snorkel (25') extending through a through opening of one of the die mould portions (3) when the stack mould (10) is closed, the snorkel (25') being provided with a terminal end and a discharge opening therein for coupling to a connector opening (27') of a center platen (13, 13').

## Revendications

1. Machine à mouler par injection avec moule à étages (10), dans laquelle deux éléments de moule externes (3, 7) enserrent une partie centrale (13, 13'), les deux faces latérales de la partie centrale (13, 13') constituant, avec les éléments de moule (3, 7), des espaces vides de moulage ainsi qu'une ouverture de raccordement (27) et des canaux d'alimentation (15) pour les espaces vides de moulage, avec une unit& d'entraînement et de fermeture (11) pour assurer le déplacement relatif entre les éléments de moule (3, 7) et la partie centrale (13, 13'), pour l'ouverture ou pour la fermeture des espaces vides de moulage et avec une unite d'injection (29) pouvant s'accoupler à l'ouverture de raccordement (27) et qui, pendant le déplacement relatif entre les éléments de moule (3, 7) et la partie centrale (13, 13'), est accouplée à l'ouverture de raccordement (27), caractérisée en ce que l'unité d'injection (29) est reliée directement à la partie centrale (13, 13').

2. Machine a mouler par injection selon la revendication 1, caractérisée en ce que l'unité d'injection (29) est reliée à la partie centrale (13, 13') au moyen de barres de traction.

3. Machine a mouler par injection selon la revendication 2, caractérisée en ce que les barres de traction sont constituées par les tiges de piston (43) de vérins de positionnement (41).

4. Machine a mouler par injection selon la revendication 2, caractérisée en ce que les barres de traction sont constituées par des vis.

5. Machine à mouler par injection selon l'une ou plusieurs des revendications 1 a 4, caractérisée en ce que l'un des éléments de moule (3) est fixe.

6. Machine à mouler par injection selon l'une ou plusieurs des revendications 1 à 4, caractérisée en ce que la position de la partie centrale (13') est fixe.

7. Machine à mouler par injection selon l'une ou plusieurs des revendications 1 à 6, caractérisée en ce que la partie centrale (13, 13') comporte un schnorkel (26) qui, lorsque le moule à étages (10) est fermé, traverse l'élément de moule par une ouverture de passage (49) de l'élément de moule (3) et présente à son extrémité une ouverture de raccordement (27) pour l'ajutage de sortie du cylindre d'injection (31) de l'unité d'injection (29).

8. Machine à mouler par injection selon l'une ou plusieurs des revendications 1 à 6, caractérisée en ce qu'il est prévu à l'extrémité de l'ajutage du cylindre d'injection (31) de l'unité d'injection (29) un schnorkel (25') qui, lorsque le moule à étages (10) est fermé, traverse l'ouverture de passage (49) d'un élément de moule (3) et présente à son extrémité une ouverture de sortie prévue pour être reliée à l'ouverture de raccordement (27') de la partie centrale (13, 13').
